# EUROPÄISCHE PATENTSCHRIFT

(11) **EP 0 503 279 B1**
(45) Veröffentlichungstag und Bekanntmachung des Hinweises auf die Patenterteilung: **12.10.1994**
(21) Anmeldenummer: 92102125.9
(22) Anmeldetag: 08.02.1992
(51) Int. Cl.: B60K 15/06, G01F 23/14, G01F 17/00

(54) **Vorrichtung zum Messen des Anteils flüssigen Brennstoffs in einem Tank**
Means for measuring the quantity of liquid fuel in a tank
Dispositif de mesure de la quantité de carburant liquide dans un réservoir

(30) Priorität: 11.03.1991 DE 4107786
(43) Veröffentlichungstag der Anmeldung: 16.09.1992
(73) Patentinhaber: PIERBURG GMBH, 41460 Neuss (DE)
(72) Erfinder: Härtel, Günter, W-4040 Neuss 21 (DE); Lösing, Karl-Heinrich, Dr.-Ing., W-4234 Alpen (DE); Schürfeld, Armin, W-4005 Meerbusch 2 (DE); Blasczyk, Johann, W-4040 Neuss 21 (DE); Kerkmann, Harald, W-4000 Düsseldorf 1 (DE)

(56) Entgegenhaltungen:
- EP-A- 0 453 709
- DE-A- 2 937 966
- DE-C- 558 118

## Beschreibung

Die Erfindung betrifft eine Vorrichtung zum Messen des Anteils flüssigen Brennstoffs in einem Tank nach dem Oberbegriff des Patentanspruchs 1.

Eine derartige Vorrichtung ist Gegenstand der DE-PS 697341 und weist bereits das Prinzip auf, aus einer Kolbenverstellung und der dadurch verursachten Druckänderung im gasgefüllten Tankraum auf den Anteil flüssigen Brennstoffs zu schließen. Bei dieser Vorrichtung wird der Kolben durch Handbetätigung gegen die Kraftwirkung einer Feder in eine definierte Stellung gebracht, aus der er beim Messen durch die Federkraft verstellt wird.

Aus der DE-C2 29 53 903 ist eine ähnliche Vorrichtung bekannt, bei der der Kolben aus einer definierten Stellung beim Messen durch einen Luftmotor verstellt wird, der mit unter- oder überatmospährischen Druck arbeitet. Diese Vorrichtung weist Drucksensoren und Wegsensoren auf, deren Signale ggf. auch einem elektronischen Steuergerät zur Weiterverarbeitung zugeführt werden können.

Die Vorrichtung mit Handverstellung des Kolbens ist nicht mehr zeitgemäß, die Kolbenverstellung mittels Luftmotor ist bauraumaufwendig und nur am gasgefüllten Tankraum anschließbar, weswegen eine Anwendung bisher nicht erfolgte.

Hiervon ausgehend liegt der Erfindung daher die Aufgabe zugrunde, eine Vorrichtung der angegebenen Art zu gestalten, die ohne Handbetätigung arbeitet, einen geringen Bauraumbedarf hat und beliebig am Brennstofftank anschließbar ist.

Diese Aufgabe ist durch die im Patentanspruch 1 gekennzeichneten Merkmale gelöst worden. Vorteilhafte Weiterbildungen sind in den Unteransprüchen angegeben.

Ein Ausführungsbeispiel der Erfindung ist in der Zeichnung dargestellt und ist nachfolgend mit Angabe erreichbarer Vorteile beschrieben.

Die Zeichnung zeigt:
**Fig. 1**
   eine erfindungsgemäße Vorrichtung an einem Brennstofftank eines Kraftfahrzeuges;

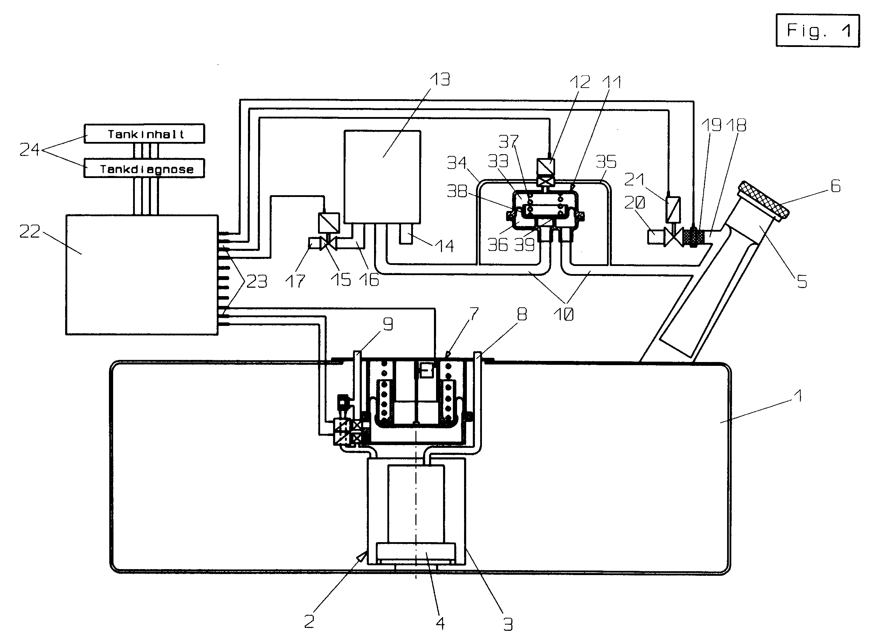

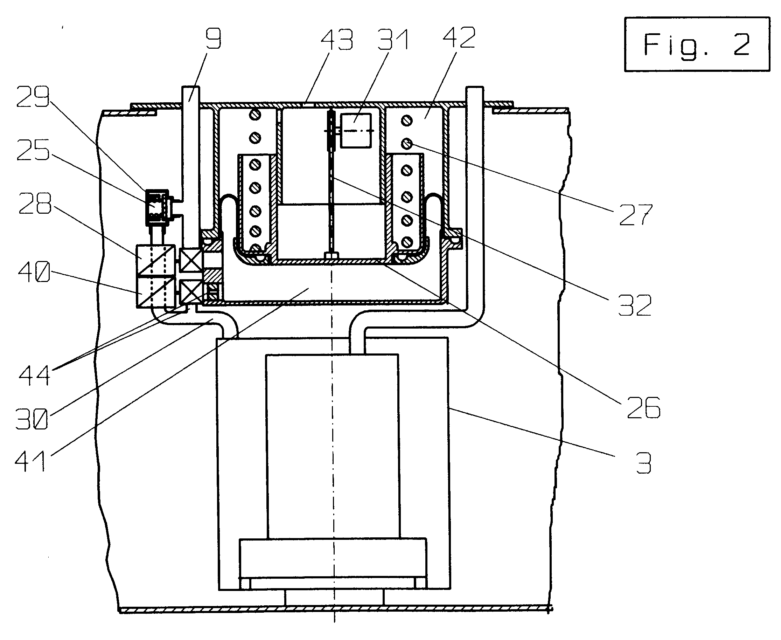

**Fig. 2** eine Einzelheit aus Fig. 1.

Fig. 1 zeigt einen Brennstofftank 1 mit einer Brennstoffördereinheit 2, bestehend aus einem Schlingertopf 3 und einer Förderpumpe 4. Der Brennstofftank 1 hat einen Tankeinfüllstutzen 5 und einen Tankverschlußdeckel 6 sowie einen am oberen Tankboden angeordneten Zylinder 7. Der Zylinder 7 und die Brennstoffördereinheit 2 sind zu einer baulichen Einheit zusammengefaßt. Der Zylinder 7 ist in Fig. 2 vergrößert dargestellt. Der Brennstofftank 1 ist mit Leitungen für den Brennstoffvorlauf 8 und den Brennstoffrücklauf 9 sowie mit einer Tankentlüftungsleitung 10 ausgestattet. Die Tankentlüftungsleitung 10 führt über ein Druckbegrenzungsventil 11 mit 2/3-Wegeventil 12, dessen Funktion später noch beschrieben wird, in einen Aktivkohlebehälter 13 mit einer ständigen Verbindung zur Atmosphäre über einen Anschluß 14. Zur Regenerierung des Aktivkohlebehälters 13 dient ein Taktventil 15, welches in Abhängigkeit von den Betriebsbedingungen einer Brennkraftmaschine über einen Anschluß 16 und eine Leitung 17 eine Verbindung zu einem Saugrohr (nicht dargestellt) herstellt. Über einen Anschluß 18 wird ein Drucksensor 19 einerseits an den Innendruck des Brennstofftanks 1 und andererseits über eine Leitung 20 an den Atmosphärendruck angeschlossen. Der Atmosphärendruck kann durch ein Absperrventil 21 in dieser Leitung 20 zwischen dem Absperrventil 21 und dem Drucksensor 19 eingeschlossen oder gespeichert werden und damit der Bezugsdruck des Drucksensors (Atmosphärendruck zu Beginn der Messung) gespeichert. Meßwertfehler durch Atmosphärendruckänderungen, z. B. aufgrund von Höhenänderungen während der Messung, werden dadurch vermieden, wobei das gespeicherte Volumen ausreichend groß dimensioniert ist, um Störeinflüsse auszuschalten, die durch den Absperrvorgang etc. bewirkt werden können. Von einem elektronischen Steuergerät 22 werden über Signalleitungen 23 Eingangssignale eingelesen und verarbeitet sowie Ausgangssignale ausgegeben. Das Ergebnis einer nachfolgend beschriebenen Tankinhaltsberechnung und Dichtheitsdiagnose kann auf einem Display 24 ausgegeben und/oder anderweitig verarbeitet werden, wie später noch angegeben wird.

Fig. 2 zeigt den Zylinder 7, bei welchem der Druck in der Brennstoffrücklaufleitung 9 mittels eines Differenzdruckventils 25 aufgestaut und zum Vorspannen einer Membran 26 gegen die Kraft einer Druckfeder 27 benutzt wird. Dazu ist ein 2/2-Wegeventil 28 geöffnet und ein 2/2-Wegeventil 40 geschlossen. Die Kraft einer Druckfeder 29 im Differenzdruckventil 25 ist so bemessen, daß der Öffnungsdruck des Differenzdruckventils 25 den Druck zur Vorspannung der Membran 26 übersteigt. Bei Erreichen der Anschlagstellung der Membran 26 steigt der Druck in der Brennstoffrücklaufleitung 9 an, bis der Öffnungsdruck des Differenzdruckventils 25 erreicht wird und dieses öffnet. Danach gelangt der zurückfließende Brennstoff über eine Leitung 30 in den Schlingertopf 3. Die Membrane 26 befindet sich in der Meßbereitschaftsstellung zur Tankinhaltsmessung. Die Membranstellung für die Meßbereitschaft wird vom elektronischen Steuergerät 22 durch einen Wegaufnehmer 31, der beispielsweise über eine mechanische Verbindung 32 mit der Membran 26 gekoppelt ist, erkannt.

Das Absperrventil 21 (Fig. 1) ist geöffnet, so daß der Tankinnendruck als Differenzdruck zur Atmosphäre gemessen werden kann. Der Atmosphärendruck, die Umgebungstemperatur und ggf. die Brennstofftemperatur werden von Sensoren für das Motormanagementsystem erfaßt (nicht dargestellt) und von diesem an das Steuergerät gemeldet und in dem Steuergerät verarbeitet.

Das 2/3-Wegeventil 12 (Fig. 1) verbindet in dieser Phase des Meßzyklus einen Membranraum 33 des Druckbegrenzungsventils 11 über eine Steuerdruckleitung 34 mit dem Teil der Tankentlüftungsleitung 10, in welchem angenähert Atmosphärendruck herrscht.

Zu Beginn der Messung des Tankinhaltes wird das 2/3-Wegeventil 12 umgeschaltet, wodurch eine Verbindung des Membranraumes 33 über eine Steuerdruckleitung 35 zu dem Teil der Tankentlüftungsleitung 10 hergestellt wird, in welchem der Tankinnendruck wirkt. Damit herrscht in dem Membranraum 33 und einem weiteren Membranraum 36 gleicher Druck. Durch die Kraft einer Druckfeder 37 wird eine Membran 38 auf einen Ventilsitz 39 gedrückt und dieser während der Messung geschlossen gehalten.

Das Absperrventil 21 wird geschlossen und damit der Bezugsdruck des Drucksensors 19 (Atmosphärendruck zu Beginn der Messung) gespeichert. Meßwertfehler durch Atmosphärendruckänderungen, z. B. aufgrund von Höhenänderungen während der Messung, werden dadurch vermieden.

Das 2/2-Wegeventil 28 (Fig. 2) wird geschlossen und das 2/2-Wegeventil 40 geöffnet. Dadurch sinkt der Druck in einem Membranraum 41 des Zylinders 7 ab. Da ein weiterer Membranraum 42 über eine Belüftungsbohrung 43 mit der Atmosphäre verbunden ist, wird der im Membranraum 41 gespeicherte Brennstoff über das 2/2-Wegeventil 40, einen Anschluß 44 und die Leitung 30 in den Schlingertopf 3 der Brennstoffördereinheit 2 solange ausgeschoben, bis ein vorgewählter Anstieg des Tankinnendruckes vom Drucksensor 19 (Fig. 1) gemeldet wird. Um dynamische Effekte zu vermeiden, kann durch eine Ausbildung des Anschlusses 44 und/oder der Belüftungsbohrung 43 als Drosselstelle der zeitliche Ablauf des Ausschiebens im notwendigen Ausmaß gestreckt werden. Nach dem Erreichen der vorgewählten Druckänderung wird auch das 2/2-Wegeventil 40 geschlossen und der Hub der Membrane 26 über den Wegaufnehmer 31 sowie gleichzeitig der Endwert der Druckänderung am Drucksensor 19 gemessen. Je nach Größe des eingeschlossenen Gasvolumens im Tank und des im Tank herrschenden Absolutdruckes sowie der Tanktemperatur oder einer für diese repräsentativen Größe, die u. U. aus der vom Motormanagement ermittelten Brennstofftemperatur abgeleitet ist, gibt es nach der allgemeinen Zustandsgleichung für ideales Gas einen bestimmten Gradienten für die Änderung von Volumen und Druck. Aus der Berechnung des im Tank eingeschlossenen Gasvolumens kann durch einfache Rechnung der Tankinhalt von flüssigem Brennstoff bestimmt werden, wenn das Gesamtvolumen des Brennstofftanks bekannt ist. Die Messung und Berechnung des Tankinhaltes ist damit abgeschlossen. Das Ergebnis wird über das Display 24 angezeigt und/oder für weitere Berechnungen, z. B. der möglichen Restfahrstrecke für den ermittelten Tankinhalt, herangezogen.

Wird die Meßendestellung der Tankinhaltsmessung für einen vorzuwählenden Zeitraum beibehalten, so kann aus der Änderung des Tankinnendruckes unter Berücksichtigung der Temperatur im Brennstofftank und des im Brennstofftank eingeschlossenen Gasvolumens darauf geschlossen werden, ob und in welchem Ausmaß eine Undichtheit des Brennstofftanks besteht. Falls die Undichtheit einen zulässigen Grenzwert übersteigt, kann dies ebenfalls über das Display angezeigt und/oder anderweitig verarbeitet werden, z. B. kann nach einem Tankstopp bei Zündung an diagnostiziert werden, ob der Tankverschlußdeckel 6 wieder ordnungsgemäß aufgeschraubt wurde und damit HC-Emissionen aus dem Tankeinfüllstutzen 5 vermieden werden.

Nach Ablauf der Tankdichtheitsprüfung werden die Ventile 12, 21, 28 und 40 wieder in die eingangs beschriebene Stellung geschaltet, wodurch der Membranraum 41 wieder mit Brennstoff geflutet und Meßbereitschaft erreicht wird.

Alternativ kann der Membranraum 41 auch über ein 2/3-Wegeventil entweder mit der Förderpumpe oder dem Tank verbunden sein. In diesem Falle entfallen die Schaltventile 40 und 28. Bei Meßbereitstellung der Membran 26 fließt dann der in Überschuß geförderte Brennstoff über das Differenzdruckventil 25 in den Tank 1 ab. Diese Alternative eignet sich jedoch nicht für die Tankdichtheitsdiagnose.

Im Prinzip kann der Membranraum 41 auch an die Brennstoffvorlaufleitung 8 angeschlossen oder außerhalb des Brennstofftanks in der Leitung für den Brennstoffvor- oder -rücklauf 8 oder 9 angeordnet werden.

In Verbindung mit dem Steuergerät 22 kann vorteilhafterweise folgendes Betriebsprogramm für die Tankinhaltsfeststellung abgelegt sein:
1. Meßbereitschaft durch Wegaufnehmerwert feststellen,
2. Tankinnendruck gegen Atmosphäre feststellen,
3. Schaltventile am Drucksensor und Druckbegrenzungsventil schalten,
4. Schaltventil für Öffnung Membranraum in den Tank schalten,
5. Membran- bzw. Wegaufnehmerverstellung ca. 5 % von maximal möglicher Verstellung laufen lassen,
6. Meßzeit 0 und Wegaufnehmer- und Drucksensorwert für Start feststellen,
7. Wegaufnehmer- und Drucksensorwertänderung feststellen,
8. Erreichen des Wegaufnehmer- oder Drucksensorwert-Änderungsendes bzw. eines vorgewählten über Startbetrag liegenden Änderungsbetrages des Wegaufnehmer- oder Drucksensorwerts feststellen,
9. Schaltventil für Schließung Membranraum zum Tank schalten,
10. Meßzeit, Wegaufnehmer- und Drucksensorwert feststellen,
11. aktuellen Tankinhalt berechnen, wobei der aktuelle Atmosphärendruck und die Tanktemperatur berücksichtigt werden,
12. Ausgabe eines Ausgangssignals für Tankinhalt an Display oder Weiterverarbeitungsstufen,
13. Schaltventile an Drucksensor und Druckbegrenzungsventil zurückschalten und das Schaltventil für Öffnung Membranraum zur Förderpumpe öffnen,
14. Meßbereitschaft durch Wegaufnehmerwert feststellen (wie zu 1.).

Wie bereits angegeben, kann danach vorgesehen werden, daß der Meßvorgang über eine weitere Zeitspanne aufrecht erhalten wird und die sich ggf. einstellende Tankinnendruckänderung pro Zeiteinheit als Maß für eine Entleerung des Brennstofftanks gewertet wird.

Sollte die erfindungsgemäße Vorrichtung jedoch nur für die Tankdichtheitsdiagnose eingesetzt werden, ist vorgesehen, daß die Membranverstellung bei zum Tank geöffnetem Membranraum 41 bis zu einem vorgewählten über Startbetrag liegenden Änderungsbetrag des Wegaufnehmer- oder Drucksensorsignals erfolgt und dann der Membranraum 41 zum Tank verschlossen wird und die Membranstellung über eine weitere Zeitspanne aufrecht erhalten wird und die sich ggf. einstellende Tankinnendruckänderung pro Zeiteinheit als Maß für eine Entleerung des Brennstofftanks gewertet wird, die durch flüssige/gasförmige Brennstoffleckage aus Tank und Anschlußleitungen hervorgerufen wird.

Darüber hinaus ist vorteilhafterweise vorgesehen, daß das Maß für die Tankentleerung um den Anteil reduziert wird, der dem im Steuergerät 22 berechneten Brennstoffverbrauch der Brennkraftmaschine entspricht, oder auch, daß der Meßvorgang insgesamt oder nur nach vorliegendem Ausgangssignal für die Anzeige des flüssigen Brennstoffanteils im Tank bei abgestellter Brennkraftmaschine erfolgt. Selbstverständlich kann ein Betriebsprogramm für die Tankdichtheitsdiagnose auch in dem Steuergerät 22 abgelegt sein, wobei im Steuergerät 22 ein zulässiger Wert für den Druckgradienten abgelegt sein kann, ab dem bei Überschreitung ein Fehlersignal ausgegeben wird.

Mit der erfindungsgemäßen Vorrichtung zum Messen des Anteils flüssigen Brennstoffs in einem Brennstofftank liegt eine mit geringem Bauraumbedarf realisierbare Lösung vor, mit der eine beliebige Anordnung des Zylinders 7 bzw. des Membranraumes 41 direkt am Tank über oder unter Brennstoffspiegel möglich geworden ist, wobei es als vorteilhaft angesehen wird, den Zylinder 7 mit dem Schlingertopf 3 zu einer baulichen Einheit zusammenzufassen.
Neben der gezeigten Ausführung, bei der der Membranraum 41 von der im Überschuß geförderten Brennstoffmenge gefüllt wird, kann auch vorgesehen sein, daß eine nur für diesen Zweck vorgesehene Pumpe den Membranraum füllt oder die Brennstofförderpumpe parallel zu einem Verbraucher oder in Reihe auch vor dem Verbraucher in den Membranraum 41 fördert. Es versteht sich von selbst, daß der Aktivkohlebehälter auch entfallen kann.

Die Vorrichtung ermöglicht im Rahmen einer Borddiagnose eine Prüfung der Brennstofftankdichtheit.

## Patentansprüche

1. Vorrichtung zum Messen des Anteils von flüssigem Brennstoff in einem Brennstofftank (1), bestehend aus einem Zylinder (7), der durch eine Membran (26) in zwei Membranräume (41, 42) aufgeteilt ist, von denen einer mit dem Tank (1) und der andere mit der Atmosphäre verbunden ist, wobei die Membran (26) beim Messen unter der Kraftwirkung einer Feder (27) aus einer definierten Stellung in den mit dem Tank (1) verbundenen Membranraum (41) geschoben wird und die bei gegenüber der Atmosphäre verschlossenem Tank (1) auftretende Druckänderung oder eine aus dem Membranverschiebeweg und der Druckänderung abgeleitete Größe als Maß für den Anteil flüssigen Brennstoffs im Tank (1) gewertet wird, dadurch gekennzeichnet, daß nach erfolgter Messung und bei zur Atmosphäre geöffnetem Tank (1) der Membranraum (41) zum Tank (1) verschlossen und zu einer Brennstoff-Förderpumpe (4) geöffnet wird, so daß die Membran (26) gegen die Kraftwirkung der Feder (27) bis in die definierte Stellung verschoben wird durch den unter Druck in den Membranraum (41) strömenden Brennstoff, der bei erneuter Messung und zur Brennstoff-Förderpumpe (4) verschlossenen und zum Tank (1) geöffneten Membranraum (41) bei zur Atmosphäre verschlossenem Tank (1) in den Tank (1) ausgeschoben wird.

2. Vorrichtung nach Anspruch 1, dadurch gekennzeichnet, daß der Membranraum (41) über ein erstes Schaltventil (40) zum Tank (1) verschlossen und über ein weiteres Schaltventil (28) zur Förderpumpe (4) geöffnet wird und umgekehrt.

3. Vorrichtung nach Anspruch 1, dadurch gekennzeichnet, daß der Membraunraum (41) über ein 2/3-Wegeventil entweder mit der Förderpumpe (4) oder dem Tank (1) verbunden ist.

4. Vorrichtung nach einem der Ansprüche 1 bis 3, dadurch gekennzeichnet, daß die Brennstoff-Förderpumpe (4) nur in den Membranraum (41), parallel oder in Reihe mit einem Verbraucher fördert.

5. Vorrichtung nach Anspruch 4, dadurch gekennzeichnet, daß der Verbraucher die Brennstoffdosiereinrichtung einer Brennkraftmaschine ist.

6. Vorrichtung nach Anspruch 4 oder 5, dadurch gekennzeichnet, daß in der Verbindungsleitung (9) zwischen Brennstoff-Förderpumpe (4) und Membrankammer (41) stromauf des Schaltventils (28) oder des 2/3-Wegeventils ein Differenzdruckventil (25) angeordnet ist.

7. Vorrichtung nach Anspruch 6, dadurch gekennzeichnet, daß der Abfluß aus dem Differenzdruckventil (25) und/oder dem Membranraum (41) in den Tank (1) über einen im Tank (1) angeordneten Schlingertopf (3) erfolgt.

8. Vorrichtung nach einem der vorstehenden Ansprüche, dadurch gekennzeichnet, daß der Tankinnendruck durch einen Drucksensor (19) erfaßt wird, der über einen Anschluß (18) an den Tank (1) angeschlossen ist und über eine Leitung (20) an die Atmosphäre, wobei in dieser Leitung (20) ein Absperrventil (21) angeordnet ist, mit dem das zwischen dem Absperrventil (21) und dem Drucksensor (19) bestehende, größenmäßig abgestimmte Volumen eingeschlossen oder gespeichert werden kann.

9. Vorrichtung nach einem der vorstehenden Ansprüche, dadurch gekennzeichnet, daß eine Tankentlüftungsleitung (10) zwischen Tank (1) und Atmosphäre über ein Druckbegrenzungsventil (11) direkt oder über einen nachgeschalteten Aktivkohlebehälter (13) in die Atmosphäre führt und das Druckbegrenzungsventil (11) bei der Messung wirkungslos geschaltet wird.

10. Vorrichtung nach einem der vorstehenden Ansprüche mit einem bekannten elektronischen Steuergerät (22), dem Sensorsignale über den Tankraumdruck und den Membranverschiebeweg zugeführt und im Steuergerät (22) zu einem Ausgangssignal für den Anteil flüssigen Brennstoffs im Tank (1) gewertet wird, dadurch gekennzeichnet, daß im Steuergerät (22) folgendes Betriebsprogramm für die Tankinhaltsfeststellung abgelegt ist:
1. Meßbereitschaft durch Wegaufnehmerwert feststellen,
2. Tankinnendruck gegen Atmosphäre feststellen,
3. Schaltventile (21, 12) am Drucksensor (19) und Druckbegrenzungsventil (11) schalten,
4. Schaltventil (40) für Öffnung Membranraum (41) in den Tank (1) schalten,
5. Membran- bzw. Wegaufnehmerverstellung ca. 5 % von maximal möglicher Verstellung laufen lassen,
6. Meßzeit 0 und Wegaufnehmer- und Drucksensorwert für Start feststellen,
7. Wegaufnehmer- und Drucksensorwertänderung feststellen,
8. Erreichen des Wegaufnehmer- oder Drucksensorwert-Änderungsendes bzw. eines vorgewählten über Startbetrag liegenden Änderungsbetrages des Wegaufnehmer- oder Drucksensorwerts feststellen,
9. Schaltventil (40) für Schließung Membranraum (41) zum Tank (1) schalten,
10. Meßzeit, Wegaufnehmer- und Drucksensorwert feststellen,
11. aktuellen Tankinhalt berechnen,
12. Ausgabe eines Ausgangssignals für Tankinhalt an Display (24) oder Weiterverarbeitungsstufen,
13. Schaltventile (21, 12) an Drucksensor (19) und Druckbegrenzungsventil (11) zurückschalten und das Schaltventil (28) für Öffnung Membranraum (41) zur Förderpumpe (4) öffnen,
14. Meßbereitschaft durch Wegaufnehmerwert feststellen (wie zu 1.).

11. Vorrichtung nach Anspruch 10, dadurch gekennzeichnet, daß bei der Tankinhaltsberechnung der aktuelle Atmosphärendruck und die Tanktemperatur oder eine für die Tanktemperatur repräsentative Größe berücksichtigt werden.

12. Vorrichtung nach Anspruch 11, dadurch gekennzeichnet, daß die für die Tanktemperatur repräsentative Größe aus der Brennstofftemperatur ermittelt wird, die vom Motormanagementsystem festgestellt wird.

13. Vorrichtung nach einem der vorstehenden Ansprüche, dadurch gekennzeichnet, daß nach vorliegendem Ausgangssignal, das die Anzeige des Anteils flüssigen Brennstoffs im Tank (1) ermöglicht, der Meßvorgang über eine weitere Zeitspanne aufrecht erhalten wird und die sich ggf. einstellende Tankinnendruckänderung pro Zeiteinheit (Druckgradient) als Maß für eine Entleerung des Brennstofftanks gewertet wird, die durch Brennstoffentnahme für die Brennkraftmaschine und flüssige/gasförmige Brennstoffleckage aus Tank und Anschlußleitungen hervorgerufen wird.

14. Vorrichtung nach einem der vorstehenden Ansprüche, dadurch gekennzeichnet, daß die Membranverstellung bei zum Tank geöffnetem Membranraum (41) bis zu einem vorgewählten über Startbetrag liegenden Änderungsbetrag des Wegaufnehmer- oder Drucksensorsignals erfolgt und dann der Membranraum (41) zum Tank verschlossen wird und die Membranstellung über eine weitere Zeitspanne aufrecht erhalten wird und die sich ggf. einstellende Tankinnendruckänderung pro Zeiteinheit als Maß für eine Entleerung des Brennstofftanks gewertet wird, die durch Brennstoffentnahme für die Brennkraftmaschine und flüssige/gasförmige Brennstoffleckage aus Tank und Anschlußleitungen hervorgerufen wird.

15. Vorrichtung nach Anspruch 13 oder 14, dadurch gekennzeichnet, daß das Maß für die Tankentleerung um den Anteil reduziert wird, der dem im Steuergerät (22) berechneten Brennstoffverbrauch der Brennkraftmaschine entspricht.

16. Vorrichtung nach Anspruch 13, 14 oder 15, dadurch gekennzeichnet, daß das Maß für die Tankentleerung unter Berücksichtigung des Absolutdrucks im Tank, der Tanktemperatur und des Anteils flüssigen Brennstoffs ermittelt wird.

17. Vorrichtung nach einem der vorstehenden Ansprüche, dadurch gekennzeichnet, daß der Meßvorgang insgesamt oder nur nach vorliegendem Ausgangssignal für die Anzeige des flüssigen Brennstoffanteils im Tank bei abgestellter Brennkraftmaschine erfolgt.

18. Vorrichtung nach einem der Ansprüche 13 - 17, dadurch gekennzeichnet, daß im Steuergerät (22) ein zulässiger Wert für das Maß der Entleerung abgelegt ist, ab dem bei Überschreitung ein Fehlersignal ausgegeben wird.

19. Vorrichtung nach einem der Ansprüche, 13 - 18, dadurch gekennzeichnet, daß im Steuergerät (22) ein Betriebsprogramm für die Tankdichtheitsdiagnose abgelegt ist.

## Claims

1. A means for measuring the quantity of liquid fuel in a tank (1), comprising a cylinder (7) divided by a diaphragm (26) into two diaphragm compartments (41, 42), one being connected to the tank (1) and the other to atmosphere, and during the measurement the diaphragm (26) is moved by action of a spring (27) from a defined position into the diaphragm compartment (41) connected to the tank (1), and the change in pressure occurring in the tank (1) when sealed from atmosphere, or a quantity derived from the diaphragm travel and the pressure change, is evaluated as a measure for the quantity of liquid fuel in the tank (1), characterised in that after the measurement and when the tank (1) is open to atmosphere, the diaphragm chamber (41) is closed off from the tank (1) and opened towards a fuel pump (4), so that the diaphragm (26) is moved to the defined position against the action of the spring (27) by the fuel flowing under pressure into the diaphragm chamber (41), whereas during the next measurement the fuel is ejected into the tank (1) when the diaphragm chamber (41) is closed off from the fuel pump (4) and opened towards the tank (1) and the tank (1) is sealed from atmosphere.

2. A means according to claim 1, characterised in that the diaphragm chamber (41) is closed off from the tank (1) by a first on-off valve (40) and opened towards the pump (4) by a second on-off valve (28) and vice versa.

3. A means according to claim 1, characterised in that the diaphragm compartment (41) is connected either to the pump (4) or to the tank (1) by a 2/3-way valve.

4. A means according to any of claims 1 to 3, characterised in that the pump (4) conveys fuel only into the diaphragm chamber (41), in parallel or in series with a consumer.

5. A means according to claim 4, characterised in that the consumer is the fuel-metering device in an internal combustion engine.

6. A means according to claim 4 or 5, characterised in that a differential pressure valve (25) is disposed upstream of the on-off valve (28) or the 2/3-way valve in the line (9) connecting the pump (4) to the diaphragm chamber (41).

7. A means according to claim 6, characterised in that the outflow from the differential pressure valve (25) and/or from the diaphragm compartment (41) into the tank (1) occurs via a stabilising vessel (3) disposed in the tank (1).

8. A means according to any of the preceding claims, characterised in that the pressure in the tank is determined by a pressure sensor (19) connected to the tank (1) by a connection (18) and to atmosphere by a line (20), and a shut-off valve (21) is disposed in the line (20) so as to enclose or store the adjusted volume between the shut-off valve (21) and the pressure sensor (19).

9. A means according to any of the preceding claims, characterised in that a tank-venting line (10) between the tank (1) and atmosphere leads to atmosphere directly via a pressure-limiting valve (11) or via a downstream active-carbon container (13) and the pressure-limiting valve (11) is switched to an inoperative position during the measurement.

10. A means according to any of the preceding claims comprising a known electronic control device (22) which is supplied with sensor signals showing the pressure in the tank and the travel of the diaphragm, the control device (22) evaluating the sensor signals to obtain an output signal showing the quantity of liquid fuel in the tank (1), characterised in that the following general program for determining the contents of the tank is stored in the control device (22):
1. Determine readiness for measurement via travel-recording reading,
2. Measure pressure in tank relative to atmosphere,
3. Switch on-off valves (21, 12) on pressure sensor (19) and pressure-limiting valve (11),
4. Switch on-off valve (40) for opening diaphragm compartment (41) into the tank (1),
5. Allow diaphragm or travel-recorder adjustment to run about 5% of the maximum possible adjustment,
6. Determine measuring time 0 and travel-recorder and pressure-sensor reading at start,
7. Determine change in travel-recorder and pressure-sensor reading,
8. Determine the end of the change in the travel-recorder or pressure sensor reading or when the change in the travel-recorder or pressure-sensor reading reaches a preselected value above the starting value,
9. Switch the on-off valve (40) for closing the diaphragm chamber (41) off from the tank (1),
10. Determine the measuring time and the reading of the travel recorder and pressure sensor,
11. Calculate the actual tank contents,
12. Deliver a tank-contents output signal to a display (24) or to further processing stages,
13. Switch back the on-off valves (21, 12) on the pressure sensor (19) and the pressure-limiting valve (11) and open the on-off valve (28) for opening the diaphragm chamber (41) towards the pump (4), and
14. Determine readiness for measurement via the travel-recorder reading (as under 1).

11. A means according to claim 10, characterised in that when the contents of the tank is calculated, allowance is made for the actual atmospheric pressure and the tank temperature or a variable representing the tank temperature.

12. A means according to claim 11, characterised in that the variable representing the tank temperature is calculated from the fuel temperature measured by the motor management system.

13. A means according to any of the preceding claims, characterised in that after receipt of the output signal for displaying the quantity of liquid fuel in the tank (1), the measuring process is continued for a further time and the change in pressure inside the tank, if any, per unit time (the pressure gradient) is evaluated as a measure of the emptying of the fuel tank as a result of fuel being withdrawn for the engine, or leakage of gaseous or liquid fuel from the tank and the connecting lines.

14. A means according to any of the preceding claims, characterised in that when the diaphragm chamber (41) is opened towards the tank, the diaphragm is adjusted until the change in the travel-recorder or pressure-sensor signal exceeds the starting amount by a preselected amount, after which the diaphragm chamber (41) is closed off from the tank and the diaphragm position is maintained for a further time and the change in pressure in the tank, if any, occurring per unit time is evaluated as a measure for the emptying of the fuel tank due to withdrawal of fuel for the engine and leakage of gaseous or liquid fuel from the tank and the connecting lines.

15. A means according to claim 13 or 14, characterised in that the measure for the emptying of the tank is reduced by a proportion corresponding to the fuel consumption of the engine, as calculated in the control device (22).

16. A means according to claim 13, 14 or 15, characterised in that the measure for the emptying of the tank is calculated with allowance for the absolute pressure in the tank, the tank temperature and the quantity of liquid fuel.

17. A means according to any of the preceding claims, characterised in that the measuring process as a whole, or only after receipt of an output signal for displaying the quantity of liquid fuel in the tank, is carried out after the engine has been switched off.

18. A means according to any of claims 13 to 17, characterised in that a permissible value for the extent of emptying is stored in the control device (22) and a fault signal is output when the value is exceeded.

19. A means according to any of claims 13 to 18, characterised in that a general program for diagnosing the sealing-tightness of the tank is stored in the control device (22).

## Revendications

1. Dispositif pour mesurer la quantité de carburant liquide dans un réservoir (1), comprenant un cylindre (7) divisé par une membrane (26) en deux volumes à membrane (41, 42) dont l'un communique avec le réservoir (1) et l'autre, avec l'atmosphère, la membrane (26) étant poussée, lors de la mesure, sous l'effet d'un ressort (27), à partir d'une position définie dans le volume à membrane (41) communiquant avec le réservoir (1), et la variation de pression enregistrée pour le réservoir (1) fermé par rapport à l'atmosphère ou une grandeur dérivée du déplacement de la membrane et de la variation de pression étant utilisé comme critère pour la quantité de carburant liquide contenue dans le réservoir (1), **caractérisé en ce** qu'après la mesure et lorsque le réservoir (1) communique avec l'atmosphère, le volume à membrane (41) est fermé en direction du réservoir (1) et ouvert vers une pompe de circulation de carburant (4), de sorte que la membrane (26) est amenée, contre l'action du ressort (27), jusqu'à la position définie, par le carburant qui s'écoule sous pression dans le volume à membrane (41) et qui, lors d'une nouvelle mesure et avec un volume à membrane (41) fermé vers la pompe de circulation de carburant (4) et ouvert vers le réservoir (1), est expulsé dans ledit réservoir (1), lequel réservoir (1) étant fermé par rapport à l'atmosphère.

2. Dispositif selon la revendication 1, caractérisé en ce que le volume à membrane (41) est fermé par rapport au réservoir (1) par l'intermédiaire d'une première soupape de commande (40) et ouvert par rapport à la pompe de circulation de carburant (4) par l'intermédiaire d'une autre soupape de commande (28) et inversement.

3. Dispositif selon la revendication 1, caractérisé en ce que le volume à membrane (41) est raccordé soit à la pompe de circulation de carburant (4), soit au réservoir (1) par l'intermédiaire d'un distributeur à 2/3 voies.

4. Dispositif selon l'une des revendications 1 à 3, caractérisé en ce que la pompe de circulation de carburant (4) ne refoule dans le volume à membrane (41) qu'en parallèle ou en série avec un consommateur.

5. Dispositif selon la revendication 4, caractérisé en ce que le consommateur est le dispositif de dosage de carburant d'un moteur à combustion interne.

6. Dispositif selon l'une des revendications 4 ou 5, caractérisé en ce que dans le conduit de raccordement (9) entre la pompe de circulation de carburant (4) et la chambre à membrane (41), en amont de la soupape de commande (28) ou du distributeur à 2/3 voies, est insérée une soupape de pression différentielle (25).

7. Dispositif selon la revendication 6, caractérisé en ce que l'écoulement de la soupape de pression différentielle (25) et/ou du volume à membrane (41) vers le réservoir (1) se fait par l'intermédiaire d'une cuve antiroulis (3) montée dans le réservoir (1).

8. Dispositif selon l'une des revendications précédentes, caractérisé en ce que la pression intérieure du réservoir est déterminée par un capteur de pression (19) communiquant par l'intermédiaire d'un raccord (18) avec le réservoir (1) et par l'intermédiaire d'un conduit (20), avec l'atmosphère, ledit conduit (20) comportant une soupape d'arrêt (21) qui permet d'enfermer ou de stocker le volume adapté en grandeur, compris entre la soupape d'arrêt (21) et le capteur de pression (19).

9. Dispositif selon l'une des revendications précédentes, caractérisé en ce que le conduit d'aération de réservoir (10) entre le réservoir (1) et l'atmosphère communique directement avec l'atmosphère par l'intermédiaire d'un limiteur de pression (11) ou par l'intermédiaire d'un réservoir de charbon actif (13) monté en aval et que le limiteur de pression (11) est inactivé pendant la mesure.

10. Dispositif selon l'une des revendications précédentes, comprenant un appareil de commande électronique (22) bien connu auquel sont transmis des signaux du capteur fournissant des informations sur la pression dans le réservoir et sur le déplacement de la membrane qui sont transformés dans l'appareil de commande (22) en un signal de sortie pour la quantité de carburant liquide contenue dans le réservoir (1), caractérisé en ce que dans l'appareil de commande (22) est stocké le programme de service suivant pour la détermination du contenu du réservoir :
1. Déterminer l'état d'attente de mesure par la valeur du capteur de déplacement,
2. déterminer la pression intérieure du réservoir par rapport à l'atmosphère,
3. commuter les soupapes de commande (21, 12) sur le capteur de pression (19) et le limiteur de pression (11),
4. commuter la soupape de commande (40) sur l'ouverture du volume à membrane (41) vers le réservoir (1),
5. faire fonctionner le déplacement de la membrane et respectivement du capteur de déplacement pendant environ 5 % du déplacement maximum possible,
6. déterminer l'instant de mesure 0 et la valeur de départ du capteur de déplacement et du capteur de pression,
7. déterminer la variation de la valeur du capteur de déplacement et du capteur de pression,
8. déterminer l'atteinte de la fin de variation de la valeur du capteur de déplacement ou du capteur de pression et respectivement d'une variation présélectionnée de la valeur du capteur de déplacement ou du capteur de pression, supérieure à la valeur de départ,
9. commuter la soupape de commande (40) sur la fermeture du volume à membrane (41) par rapport au réservoir (1),
10. déterminer le temps de mesure, la valeur du capteur de déplacement et du capteur de pression,
11. calculer le contenu momentané du réservoir,
12. sortie d'un signal de sortie pour l'affichage du contenu du réservoir sur écran (24) ou la transmission à des étages de traitement ultérieur,
13. remettre les soupapes de commande (21, 12) sur le capteur de pression (19) et le limiteur de pression (11) dans la position initiale et ouvrir la soupape de commande (28) pour l'ouverture du volume à membrane (41) vers la pompe de circulation de carburant (4),
14. déterminer l'état d'attente de mesure par la valeur du capteur de déplacement (comme dans 1.).

11. Dispositif selon la revendication 10, caractérisé en ce que lors du calcul du contenu du réservoir, la pression atmosphérique et la température du réservoir momentanées ou une grandeur représentative de la température du réservoir sont prises en considération.

12. Dispositif selon la revendication 11, caractérisé en ce que la grandeur représentative de la température du réservoir est déterminée à partir de la température du carburant qui est détectée par le système de gestion du moteur.

13. Dispositif selon l'une des revendications précédentes, caractérisé en ce qu'après l'élaboration du signal de sortie qui permet l'affichage de la quantité de carburant liquide contenue dans le réservoir (1), l'opération de mesure est maintenue pendant un intervalle de temps supplémentaire, et que la variation éventuelle de la pression intérieure du réservoir par unité de temps (gradient de pression) est utilisée comme critère pour une vidange du réservoir de carburant provoquée par le prélèvement de carburant pour le moteur à combustion interne et par des fuites de carburant liquide/gazeux dans le réservoir et les conduites de raccordement.

14. Dispositif selon l'une des revendications précédentes, caractérisé en ce que, le volume à membrane (41) étant ouvert vers le réservoir, la membrane se déplace jusqu'à une valeur de variation présélectionnée et supérieure à la valeur de départ du signal du capteur de déplacement ou du capteur de pression, que le volume à membrane (41) est ensuite fermé par rapport au réservoir, la position de la membrane étant maintenue pendant un intervalle de temps supplémentaire, et que la variation éventuelle de la pression intérieure du réservoir par unité de temps est utilisée comme critère pour une vidange du réservoir de carburant provoquée par le prélèvement de carburant pour le moteur à combustion interne et par des fuites de carburant liquide/gazeux dans le réservoir et dans les conduites de raccordement.

15. Dispositif selon l'une des revendications 13 ou 14, caractérisé en ce que la valeur de la vidange du réservoir est diminuée de la quantité qui correspond à la consommation de carburant du moteur à combustion interne calculée dans l'appareil de commande (22).

16. Dispositif selon l'une des revendications 13, 14 ou 15, caractérisé en ce que la valeur de la vidange du réservoir est déterminée en tenant compte de la pression absolue dans le réservoir, de la température du réservoir et de la quantité de carburant liquide.

17. Dispositif selon l'une des revendications précédentes, caractérisé en ce que l'opération de mesure se déroule en permanence ou seulement après l'obtention du signal de sortie pour l'affichage de la quantité de carburant liquide contenue dans le réservoir lorsque le moteur à combustion interne est arrêté.

18. Dispositif selon l'une des revendications 13 à 17, caractérisé en ce que dans l'appareil de commande (22) est stockée une valeur admissible pour la vidange à partir de laquelle un signal d'erreur est délivré en cas de dépassement.

19. Dispositif selon l'une des revendications 13 à 18, caractérisé en ce que dans l'appareil de commande (22) est stocké un programme de service pour le diagnostic de l'étanchéité du réservoir.
